# EUROPEAN PATENT APPLICATION

(11) **EP 3 223 388 A1**
(43) Date of publication of application: **27.09.2017**
(21) Application number: 16020098.6
(22) Date of filing: 24.03.2016
(51) Int. Cl.: H02J 7/00

(54) **AN APPARATUS AND A METHOD FOR TECHNICAL PARAMETER EXTRACTION**

(71) Applicant: Max-Planck-Gesellschaft zur Förderung der Wissenschaften e.V., 80539 München (DE)
(72) Inventor: Loes, Peter, 82346 Andechs (DE); Gerhauser, Ralf, 85614 Kirchseeon (DE)
(74) Representative: Stellbrink & Partner Patentanwälte mbB

(57) **Abstract**

Disclosed is a handheld standalone apparatus adapted to extract and display technical parameters corresponding to at least one electronic device connected to the handheld apparatus comprising at least one connecting terminal, at least one CPU, and at least one display adapted to displaying data processed by the CPU with the corresponding parameter name. Also disclosed is a method for retrieving technical parameters of multiple devices.

## Description

### Field

The invention relates to the field of batteries and battery-related devices. More precisely, the invention relates to accessing technical parameters of batteries, battery-related devices and/or battery-operated devices.

### Introduction

Many if not most electronic devices operate on batteries or a combination of battery cells. Some common types of rechargeable batteries are lithium battery cells (multiple cells combined in a battery pack) and/or a nickel-metal hydride. Rechargeable batteries have a certain life expectancy often determined by some number of charge cycles.

A battery or a battery pack sometimes comes with a Battery Management System (BMS) designed to control battery parameters and monitor behaviour. However, it is not common for a BMS to display any battery parameters by default. For a consumer, it is beneficial to be able to access the technical parameters of such batteries or devices connected to them such as Battery Management Systems (BMS), battery recharger, or devices which the batteries are powering such as laptops, cellphones, and many others. For businesses receiving batteries from OEDs, it is similarly beneficial to be able to assess the claims of OEDs about battery parameters such as charging cycles, battery capacity, circulating current and others. For OEDs, a device capable of accessing battery, BMS and other related devices' parameters would be a great help in terms of quality control and battery testing.

CN utility model 201717345 briefly describes a hand-operated device of a lithium battery, which comprises a main control CPU, an EEPROM data memory and a power supply module, wherein the main control CPU is in communication with the EEPROM data memory, and the main control CPU is also in communication with an external lithium battery protecting plate. With the communication with the PC, the device according to the utility model can know some internal information of the lithium battery.

US patent 6,084,523 discloses an apparatus and method of measuring and/or determining the status of battery parameters by receiving and/or decoding an RF information signal from a sensor/transceiver located in the target battery, where the RF information signal contains information regarding the status of particular parameters of the target battery. The readout unit is operable to receive and/or decode the received RF information signal, determine the status of particular parameters based on the battery information contained in the received RF information signal, and display the status information.

### Summary

The present invention is specified in the claims as well as in the below description. Preferred embodiments are particularly specified in the dependent claims and the description of various embodiments.

The above features along with additional details of the invention, are described further in the examples below, which are intended to further illustrate the invention but are not intended to limit its scope in any way.

In a first aspect, the invention describes a handheld standalone apparatus adapted to extract and display technical parameters corresponding to at least one electronic device connected to the handheld apparatus comprising (i) at least one connecting terminal adapted to connect to a Battery Management System (BMS) and/or to a microcontroller with a BMS and to receive data relating to technical parameters, (ii) at least one CPU adapted to process data received by the at least one connecting terminal and to organize data per technical parameter, and (iii) at least one display adapted to displaying data processed by the CPU with the corresponding parameter name.

The term handheld is intended to mean a portable apparatus easily carried and operated while in a user's hands. As used herein, the term handheld is comparable to portable and refers to a lightweight and easy to carry device.

The term standalone refers in this document to something self-contained. The apparatus described herein can contain all of the components for its function and does not require being incorporated into a larger device or being a component of a larger device on its own.

Technical parameters can refer to parameters related to battery or individual battery cells status, like the current running through the battery, the remaining capacity of the battery, the state of charge of the battery, the charging current and voltage, the charger cycle count, the voltage in individual battery cells along with maximum and minimum voltage within the cells. This list is not exhaustive and only gives a few examples of technical parameters that the handheld standalone apparatus can extract from the BMS or devices connected to the BMS including the battery. A larger but also non-exhaustive list referring to technical parameters that can be extracted via connecting to a particular BMS is given below.

In a second aspect, a method for retrieving technical parameters of multiple devices making use of the invention is provided. The method comprises (i) connecting a handheld standalone apparatus to a BMS or to a microcontroller with a BMS, (ii) extracting the data relating to parameters of the BMS or of another device connected to the BMS such as a battery, individual power cells within the battery, a Battery Recharger, and/or a User Electronic Device, (iii) assigning the extracted data to specific parameters in an organized manner, and (iv) displaying the data per parameter on the screen of the handheld standalone apparatus.

The apparatus can connect to at least a rechargeable battery, individual cells of a rechargeable battery, a Battery Management System (BMS), a microcontroller with a BMS, a battery recharger, and/or a User Electronic Device. The connecting terminal can connect at least to a BMS or to a microcontroller with a BMS, through which the apparatus can obtain the technical parameters of the devices listed above. Those devices can be connected to the BMS or to a microcontroller with a BMS. In such a way, the disclosed apparatus may not be directly connected to the devices from which it can extract technical parameters, but rather connect to a BMS and access technical parameters of other devices through it. In the following, a person skilled in the art will understand that "BMS" can refer to "a Battery Management Ssystem and/or a microcontroller with a Battery Management System". The apparatus can be adapted to connect to a BMS comprising an SMBus and/or an I²C "Integrated Circuit Interface" up to 100 kHz.

The apparatus can display technical parameters of lithium batteries and/or battery cells, and/or nickel-metal hydride batteries and/or battery cells.

The CPU of the apparatus can comprise an ARM Cortex-M3 processor. This processor can contribute to the apparatus being a low power apparatus. The apparatus can comprise a button cell battery supplying the energy. The apparatus can operate continuously on the same battery for at least 3 days, more preferably 4 days, even more preferably 5 days. Since the handheld apparatus is a low power apparatus, it does not consume energy in the off state. Furthermore, the apparatus is adapted to switch the display off automatically after no input has been received for at least 10 seconds, preferably for between 10 seconds and one minute and to automatically switch the CPU off when no input has been received for at least 30 seconds, more preferably for between 30 seconds and two minutes.

The apparatus can operate with a voltage of 1.8-3.8 V for components other than the display. The display can operate with a voltage of 2.7-3.3 V. The battery can provide a voltage of 2.7-3.3 V. The current circulating within the apparatus can be 0 µA when the apparatus is powered off, between 50 µA and 150 µA when the apparatus is on without the display being on, and between 350 µA and 500 µA when the display is on as well.

The display can be an LCD display adapted to operate with a low power apparatus. The connecting terminal can be adapted for different 3-pole female connectors and/or male connectors. The apparatus can be adapted to be debugged using a DBG debug interface (an open source debugger) with minimal I/O pin use that could allow for the apparatus to be used with a single BMS and/or with multiple BMS. The debugging can be done via a debugging interface: a separate port that can be accessed via USB and/or via a debugging probe. Connecting to the handheld apparatus can be done from for example a PC in order to update the software of the handheld apparatus and/or for troubleshooting.

The apparatus can further comprise at least three pushbuttons adapted to respectively switch the apparatus on and off, and move forward and backwards between the technical parameters displayed on the screen.

The apparatus can comprise at least one output port that can be adapted to transmit data to external devices via LEUART, UART and/or USB adapters. The apparatus can thus be connected to an external device such as a personal computer, a tablet, a smartphone and/or a similar electronic device. This can enable the user of the apparatus to store the technical parameters retrieved by the apparatus on a separate device. In such a way, a user can run a long-term diagnostics test on a battery and/or on a BMS to see how the technical parameters change over time. This function can be used by both an end user of a device comprising a battery and/or by a battery manufacturer testing the specifications of the produced batteries.

In a particular embodiment, consider a user possessing an electric bicycle. Such devices usually come with a rechargeable battery. The user might be interested in knowing whether the battery of the bicycle behaves according to manufacturer's specifications. The user can then connect the handheld standalone apparatus as disclosed by the invention to the BMS of the electric bicycle and view the technical parameters of the battery. For example, the user can view the number of charging cycles under the technical parameter ChargerCycleCount. The user can also monitor such parameters as BatteryAverageCurrent over time to see whether the battery remains stable. The user can also check the status of individual battery cells with parameters like VoltageCell, CellMinVoltage.CellMaxVoltage and/or CellPowerOffVoltage. Furthermore, in a preferred embodiment, the user can check the status of the charger for the electric bicycle through such parameters as ChargingVoltage and ChargingCurrent. The user can also use the handheld standalone apparatus to see the status of the electric bicycle through such parameters as Voltage, BatteryCurrent and BatteryAverage. The full list of technical parameters that can be extracted by the handheld standalone apparatus is below.

Listed below is a list of technical parameters for an example case of a microcontroller ATMEGA32HVB from ATMEL that the handheld standalone apparatus can extract and display:
Device Address: specifies the address of the BMS that the handheld apparatus extracts the parameters from
ManufacturerAccess: read only access for the handheld standalone apparatus requested
RemainingCapacityAlarm: When the capacity of the battery falls below the value of this parameter, the battery sends an alarm to the host. The RemainingTimeAlarm flag in the BatteryStatus would be activated.
Battery Mode: returns a 1 or 0 value for each of the following values
   Balancing Cell3
   Balancing Cell2
   Balancing Cell1
   Balancing Cell4
   Deep Under Voltage recovery
   Current Protection Status
   Discharge FET
   Charge FET
Core Temperature: current chip temperature in degrees Kelvin
Voltage: overall voltage across the battery in mV
BatteryCurrent: current current in mA flowing across the battery
BatteryAverageCurrent: average current flowing across the battery in mA
RelativeStateOfCharge: relative state of charge within the battery in percent
AbsoluteStateOfCharge: absolute state of charge within the battery in percent
RemainingCapacity: remaining capacity of the battery in mAh
FullChargeCapacity: full charge capacity in mAh
RunTimeToEmpty: remaining running time in minutes
AverageTimeToEmpty: average time to discharge in minutes
AverageTimeToFull: average time to full charge in minutes
ChargingCurrent: charging current in mA
ChargingVoltage: maximum charging voltage in mV
Battery Status (flags): returns a 1 or 0 value for each of the following values
   Over Charged Alarm
   Terminate Charge Alarm
   Over Temp Alarm
   Terminate Discharge Alarm
   Battery Protection Triggered
   Remaining Capacity Alarm
   Remaining Time Alarm
   Initialized
   Discharging
   Fully Charged
   Fully Discharged
ChargerCycleCount: number of charging cycles
DesignCapacity: claimed capacity in mAh
DesignVoltage: claimed voltage in mV
Specificationlnfo: version and revision number
ManufactureDate: date of manufacture
SerialNumber: serial number
ManufacturerName: name of manufacturer
DeviceName: name of the device
DeviceChemistry: chemical designation of the device
ManufacturerData: manufacturer data
ShuntResistance: shunt resistance in µOhm
CellslnSeries: number of battery cells in series
OverCurrentReactionTime: overcurrent reaction time (level 1)
OverCurrentCharge: overcurrent charge (level 1)
OverCurrentDischarge: overcurrent discharge (level 1)
HighCurrentReactionTime: overcurrent reaction time (level 2)
HighCurrentCharge: overcurrent charge (level 2)
HighCurrentDischarge: overcurrent discharge (level 2)
VoltageCell4: voltage in the 4^{th} battery cell in mV
VoltageCell3: voltage in the 3^{rd} battery cell in mV
VoltageCell2: voltage in the 2^{nd} battery cell in mV
VoltageCell1: voltage in the 1^{st} battery cell in mV
CellMinVoltage: minimum voltage in a cell in mV
CellMaxVoltage: maximum voltage in a cell in mV
CellPowerOffVoltage: voltage at which the BMS power off the device
These and other parameters can be shown individually or in any combination thereof.

The following embodiments form part of the invention:
1. A handheld standalone apparatus adapted to extract and display technical parameters corresponding to at least one electronic device connected to the handheld apparatus comprising
   a) at least one connecting terminal adapted to connect to a Battery Management System (BMS) and/or to a microcontroller with a BMS and to extract data relating to technical parameters; and
   b) at least one CPU adapted to process data received by the at least one connecting terminal and to organize data per technical parameter; and
   c) at least one display adapted to displaying data processed by the CPU with the corresponding parameter name.
2. An apparatus according to embodiment 1 adapted to extract, process, organize and/or display technical parameters of at least one or a plurality of a rechargeable battery and/or at least one individual cell of a rechargeable battery and/or a Battery Management System, and/or a microcontroller with a Battery Management System and/or a User Electronic Device and/or a battery recharger.
3. An apparatus according to any of the embodiments 1 or 2 adapted to display technical parameters of lithium battery cells and/or of nickel-metal hydride battery cells.
4. An apparatus according to any of the embodiments 1 to 3 wherein the CPU comprises an ARM Cortex-M3 processor.
5. An apparatus according to any of the embodiments 1 to 4 requiring a voltage of 1.8-3.8 V for components other than the display.
6. An apparatus according to any of the embodiments 1 to 5 further comprising a button cell battery as a means of energy.
7. An apparatus according to any of the embodiments 1 to 6 further comprising a battery with a voltage of 2.7-3.3 V.
8. An apparatus according to any of the embodiments 1 to 7 further comprising at least one pushbutton adapted to power the apparatus on, and at least two pushbuttons adapted to move forward and backward between technical parameters displayed on the screen.
9. An apparatus according to any of the embodiments 1 to 8 wherein the display is an LCD display.
10. An apparatus according to any of the embodiments 1 to 9 wherein the display requires a voltage of 2.7-3.3 V.
11. An apparatus according to any of the embodiments 1 to 10 wherein the current circulating in the apparatus is 0µA when the apparatus is off, between 50µA and 150µA when the apparatus is on without the display and between 350µA and 500µA when the display is on as well.
12. An apparatus according to any of the embodiments 1 to 11 wherein the display is adapted to automatically switch off after no input has been received for at least 10 seconds, preferably for between 10 seconds and 1 minute and the CPU is adapted to switch off after no input has been received for at least 30 seconds, preferably for between 30 seconds and 2 minutes.
13. An apparatus according to any of the embodiments 1 to 12 further comprising at least one output port adapted to transmit data to external devices via LEUART, UART and/or USB adapters.
14. An apparatus according to any of the embodiments 1 to 13 wherein the output port is adapted to be connected to a personal computing device and/or a tablet and/or a cell phone.
15. An apparatus according to any of the embodiments 1 to 14 adapted to connect to the Battery Management System comprising an SMBus and/or an I²C "Inter-Integrated Circuit Interface" up to 100 kHz.
16. An apparatus according to any of the embodiments 1 to 15 further adapted to extract and display the BMS technical parameters.
17. An apparatus according to any of the embodiments 1 to 16 further adapted to extract and display the technical parameters of a User Electronic Device connected to the BMS and/or to the microcontroller with a BMS.
18. An apparatus according to any of the embodiments 1 to 17 further adapted to extract and display technical parameters from a charger used to charge the BMS and/or the battery.
19. An apparatus according to any of the embodiments 1 to 18 wherein the connecting terminal is adapted for different 3-pole female connectors and/or male connectors.
20. An apparatus according to any of the embodiments 1 to 19 further adapted to be debugged using a DBG debug interface with minimal I/O pin use allowing for adapting the apparatus for use with a single BMS microcontroller and/or with multiple BMS microcontrollers.
21. An apparatus according to any of the embodiments 1 to 20 with a minimal life span of 3 days, more preferably 4 days, even more preferably 5 days.
22. A method for retrieving technical parameters of multiple devices comprising of
   a) connecting a handheld standalone apparatus according to any of the embodiments 1-21 to a BMS or to a microcontroller with a BMS; and
   b) extracting the data relating to parameters of the BMS or of another device connected to the BMS such as a battery, individual power cells within the battery, a Battery Recharger, and/or a User Electronic Device; and
   c) assigning the extracted data to specific parameters in an organized manner; and
   d) displaying the data per parameter on the screen of the handheld standalone apparatus according to any of the embodiments 1-21.
23. A method according to embodiment 22 wherein the parameters of the BMS extracted in step b) comprise BatteryStatus, RemainingCapacity, FullChargeCapacity, ChargerCycleCount, ManufactureDate, ManufacturerName and/or other parameters.
24. A method according to any of the preceding embodiments 22 or 23 wherein the parameters of the battery or of individual power cells within the battery extracted in step b) comprise VoltageCell 1 to 4, CellMinVoltage, CellMaxVoltage, CellPowerOffVoltage and/or other parameters.
25. A method according to any of the preceding embodiments 22 to 24 wherein the parameters of the Battery Recharger extracted in step b) comprise ChargingVoltage, ChargingCurrent, and/or other parameters.
26. A method according to any of the preceding embodiments 22 to 25 wherein the parameters of the User Electronic Device extracted in step b) comprise Voltage, BatteryCurrent, BatteryAverage and/or other parameters.

### Brief description of the drawings

The skilled person will understand that the drawings, described below, are for illustration purposes only. The drawings are not intended to limit the scope of the present teachings in any way.
**Fig. 1** shows an embodiment of an apparatus according to the invention.
**Fig. 2** shows a more technical and detailed embodiment of an apparatus according to the invention.
**Fig. 3** shows an embodiment of a method according to the invention.

### Description of various embodiments

In the following, exemplary embodiments of the invention will be described, referring to the figures. These examples are provided to provide further understanding of the invention, without limiting its scope.

In the following description, a series of features and/or steps are described. The skilled person will appreciate that unless required by the context, the order of features and steps is not critical for the resulting configuration and its effect. Further, it will be apparent to the skilled person that irrespective of the order of features and steps, the presence or absence of time delay between steps, can be present between some or all of the described steps.

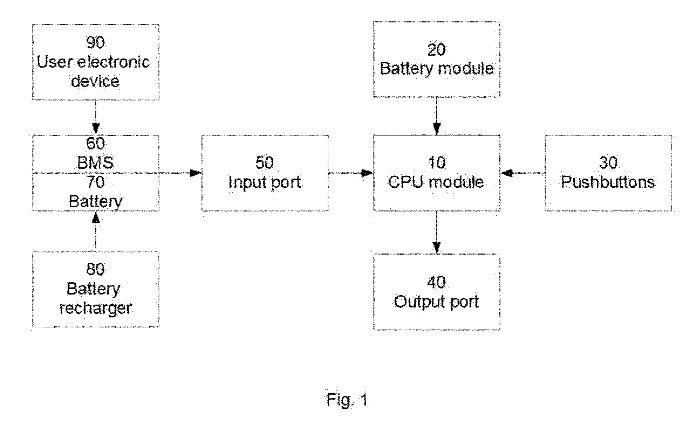

**Fig. 1** shows an embodiment of an apparatus according to the invention. The CPU module **10** can comprise an ARM Cortex-M3 processor. The handheld standalone apparatus can be powered by a Battery module **20.** The Battery module **20** can comprise a button cell energy supplying a voltage of 2.7-3.3 V. The handheld standalone apparatus can further comprise at least three pushbuttons **30.** The first pushbutton **30** can be an on/off pushbutton adapted to power the apparatus on and off. The second and third pushbuttons can be adapted to switch between the information displayed on the screen. This information can comprise the technical parameters extracted from other devices. The handheld standalone apparatus can further comprise an output port **40.** The output port **40** can be connected to other external devices in order to transmit the data from the handheld standalone apparatus to them. In a preferred embodiment, the output port **40** can be adapted to transmit data via LEUART, UART and/or USB adapters.

The CPU module **10** coordinates the extraction of technical parameters from at least one device connected to the connecting terminal **50.** In a preferred embodiment, this device can be a BMS **60.** The BMS **60** can be a part of a User Electronic Device **90.** A person skilled in the art will understand that a BMS **60** is often inbuilt in electronic devices operating with a battery. The User Electronic Device **90** can for example be an electric bicycle, a laptop, a household appliance, a personal computing device, an electric car and/or another device requiring a lithium ion and/or a nickel-metal hydride battery. The BMS **60** can be connected to a battery **70.** The CPU **10** can be adapted to extract technical parameters directly from the BMS **60** or through the BMS **60** from the battery **70,** from the Battery recharger **80**, or the User Electronic Device **90.**

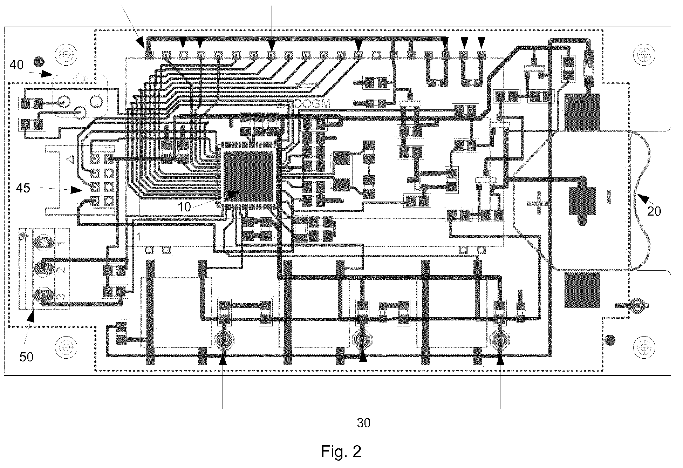

**Fig. 2** shows another embodiment of an apparatus according to the invention. A detailed view of the components of the invention and their connections is demonstrated. The CPU module **10** is the computing centre of the invention. Above it, the LCD display **11** connectors can be seen. The Battery module **20** is on the right side of the figure. The three pushbuttons **30** are at the bottom of the figure. The output port **40** is in the top left corner. It can for example be a LUART. A debugging interface **45,** not shown in **Fig. 1** but shown here in **Fig. 2**, can be used to connect to the apparatus in order to debug it. It can be for example a USB port and/or a debugging probe adapted port. The debugging interface **45** can be used for example to troubleshoot the handheld apparatus and/or to update the software on it. The connecting terminal **50** is shown on the lower left of **Fig. 2****.** It can have three connectors for connecting to a BMS and/or to a microcontroller with a BMS (not shown here).

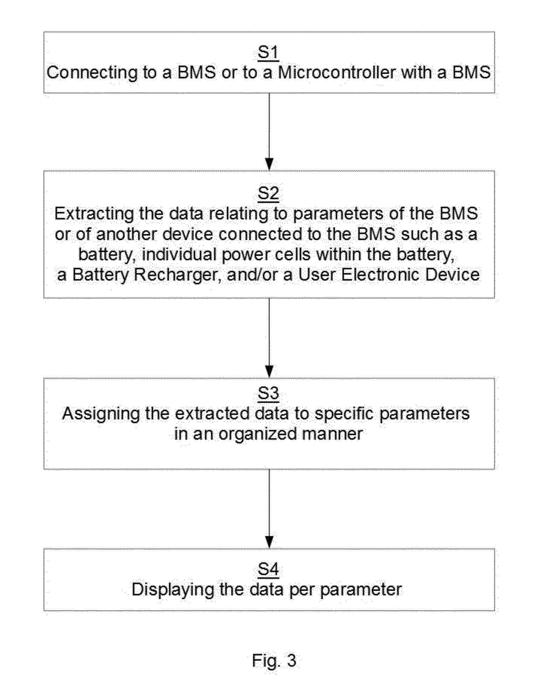

**Fig. 3** shows an embodiment of a method according to the invention. The first step, **S1**, comprises connecting to a BMS or to a microcontroller with a BMS. This can be achieved for example with a handheld apparatus as described above and below in this document. The second step, **S2**, comprises extracting the data relating to parameters of the BMS or of another device connected to the BMS such as a battery, individual power cells within the battery, a Battery Recharger, and/or a User Electronic Device. The extraction can be done in a passive manner, i.e. only with requiring reading permission from the BMS. The parameters can comprise data relating to temperature, remaining capacity, charging cycles and/or other technical data. A non-exclusive list of example parameters can be found above. The third step, **S3**, comprises assigning the extracted data to specific parameters in an organized manner. This can comprise rounding off parameters with too many decimal spaces, and/or assigning a name to an extracted parameter. The fourth step, **S4**, comprises displaying the data extracted per technical parameter.

As used herein, including in the claims, singular forms of terms are to be construed as also including the plural form and vice versa, unless the context indicates otherwise. Thus, it should be noted that as used herein, the singular forms "a," "an," and "the" include plural references unless the context clearly dictates otherwise.

Throughout the description and claims, the terms "comprise", "including", "having", and "contain" and their variations should be understood as meaning "including but not limited to", and are not intended to exclude other components.

The present invention also covers the exact terms, features, values and ranges etc. in case these terms, features, values and ranges etc. are used in conjunction with terms such as about, around, generally, substantially, essentially, at least etc. (i.e., "about 3" shall also cover exactly 3 or "substantially constant" shall also cover exactly constant).

The term "at least one" should be understood as meaning "one or more", and therefore includes both embodiments that include one or multiple components. Furthermore, dependent claims that refer to independent claims that describe features with "at least one" have the same meaning, both when the feature is referred to as "the" and "the at least one".

It will be appreciated that variations to the foregoing embodiments of the invention can be made while still falling within the scope of the invention. Alternative features serving the same, equivalent or similar purpose can replace features disclosed in the specification, unless stated otherwise. Thus, unless stated otherwise, each feature disclosed represents one example of a generic series of equivalent or similar features.

Use of exemplary language, such as "for instance", "such as", "for example" and the like, is merely intended to better illustrate the invention and does not indicate a limitation on the scope of the invention unless so claimed. Any steps described in the specification may be performed in any order or simultaneously, unless the context clearly indicates otherwise.

All of the features and/or steps disclosed in the specification can be combined in any combination, except for combinations where at least some of the features and/or steps are mutually exclusive. In particular, preferred features of the invention are applicable to all aspects of the invention and may be used in any combination.

## Claims

1. A handheld standalone apparatus adapted to extract and display technical parameters corresponding to at least one electronic device connected to the handheld apparatus comprising
a) at least one connecting terminal adapted to connect to a Battery Management System (BMS) and/or to a microcontroller with a BMS and to extract data relating to technical parameters; and
b) at least one CPU adapted to process data received by the at least one connecting terminal and to organize data per technical parameter; and
c) at least one display adapted to displaying data processed by the CPU with the corresponding parameter name.

2. An apparatus according to claim 1 adapted to extract, process, organize and/or display technical parameters of at least one or a plurality of a rechargeable battery and/or at least one individual cell of a rechargeable battery and/or a Battery Management System, and/or a microcontroller with a Battery Management System and/or a User Electronic Device and/or a battery recharger.

3. An apparatus according to any of the preceding claims adapted to display technical parameters of lithium battery cells and/or of nickel-metal hydride battery cells.

4. An apparatus according to any of the preceding claims wherein the CPU comprises an ARM Cortex-M3 processor.

5. An apparatus according to any of the preceding claims further comprising a button cell battery with a voltage of 2.7-3.3 V as a means of energy, and wherein the apparatus is adapted to operate with a voltage of 1.8-3.8 V for components other than the display and with a voltage of 2.7-3.3 V for the display, and/or wherein the apparatus is adapted to operate continuously for at least 3 days, more preferably for at least 4 days, even more preferably for at least 5 days.

6. An apparatus according to any of the preceding claims further comprising at least one pushbutton adapted to power the apparatus on, and at least two pushbuttons adapted to move forward and backward between technical parameters displayed on the screen, and/or wherein the apparatus further comprises at least one output port adapted to transmit data to external devices via LEUART, UART and/or USB adapters and wherein the at least one output port is adapted to be connected to a personal computing device and/or to a tablet and/or to a cell phone.

7. An apparatus according to any of the preceding claims wherein the display is an LCD display.

8. An apparatus according to any of the preceding claims wherein the current circulating in the apparatus is 1µA when the apparatus is off, between 50µA and 150µA when the apparatus is on without the display and between 350µA and 500µA when the display is on as well, and/or wherein the display is adapted to automatically switch off after no input has been received for at least 10 seconds, preferably for between 10 seconds and 1 minute and the CPU is adapted to switch off after no input has been received for at least 30 seconds, preferably for between 30 seconds and 2 minutes.

9. An apparatus according to any of the preceding claims adapted to connect to the Battery Management System comprising an SMBus and/or an I²C "Inter-Integrated Circuit Interface" up to 100 kHz.

10. An apparatus according to any of the preceding claims wherein the connecting terminal is adapted for different 3-pole female connectors and/or male connectors, and/or wherein the apparatus is further adapted to be debugged using a DBG debug interface with minimal I/O pin use allowing for adapting the apparatus for use with a single BMS microcontroller and/or with multiple BMS microcontrollers.

11. A method for retrieving technical parameters of multiple devices comprising of
a) connecting a handheld standalone apparatus according to any of the preceding claims 1 to 10 to a BMS or to a microcontroller with a BMS; and
b) extracting the data relating to parameters of the BMS or of another device connected to the BMS such as a battery, individual power cells within the battery, a Battery Recharger, and/or a User Electronic Device; and
c) assigning the extracted data to specific parameters in an organized manner; and
d) displaying the data per parameter on the screen of the handheld standalone apparatus according to any of the preceding claims 1 to 10.

12. A method according to claim 11 wherein the parameters of the BMS extracted in step b) comprise BatteryStatus, RemainingCapacity, FullChargeCapacity, ChargerCycleCount, ManufactureDate, ManufacturerName and/or other parameters.

13. A method according to any of the preceding claims 11 to 12 wherein the parameters of the battery or of individual power cells within the battery extracted in step b) comprise VoltageCell, CellMinVoltage, CellMaxVoltage, CellPowerOffVoltage and/or other parameters.

14. A method according to any of the preceding claims 11 to 13 wherein the parameters of the Battery Recharger extracted in step b) comprise ChargingVoltage, ChargingCurrent, and/or other parameters.

15. A method according to any of the preceding claims 11 to 14 wherein the parameters of the User Electronic Device extracted in step b) comprise Voltage, BatteryCurrent, BatteryAverage and/or other parameters.
